# EUROPEAN PATENT APPLICATION

(11) **EP 1 522 765 A2**
(43) Date of publication of application: **13.04.2005**
(21) Application number: 04022016.2
(22) Date of filing: 16.09.2004
(51) Int. Cl.: F16H 7/08, F16H 7/18

(54) **Tensioner lever**

(30) Priority: 10.10.2003 JP 2003352105
(71) Applicant: Tsubakimoto Chain Co., Osaka 530-0018, (JP)
(72) Inventor: Hashimoto, Hiroshi, Osaka 530-0018 (JP); Mori, Kaori, Osaka 530-0018 (JP)
(74) Representative: Patentanwälte Hosenthien-Held und Dr. Held

(57) **Abstract**

In a pivoted tensioner lever (100) for maintaining tension in an automobile engine timing chain (C), an arc-shaped shoe (100a) on which the timing chain (C) slides, comprises a guide region (111), which guides and controls the part of the transmission chain (C) approaching the end of the tensioner lever (100) near the pivot axis, and a pressing region (112), which is continuous with the guide region (111), and which absorbs the looseness of the transmission chain (C) moving away from the tip of the tensioner lever (100). The radius (r) of curvature of the pressing region (112) is smaller than the radius (R) of curvature of the guide region (111).

## Description

This invention relates to a tensioner lever of the type used in the timing transmission of an automobile engine, or in a similar machine where power is transmitted by an endless, flexible, transmission medium, such as a roller chain or a silent chain, from a driving sprocket to one or more driven sprockets.

An example of a typical tensioner lever is described and shown in Japanese Patent No. 3448122 (on page 1, and FIGS. 1 to 4). The purpose of the tensioner lever is to preventing transmission failure due to excessive tension or excessive looseness of the transmission chain. The lever comprises an arm, pivotable about a pivot axis adjacent one end of the lever, and a shoe extending lengthwise along the arm, from one end of the arm to the other

In the conventional tensioner lever, the curvature of the chain-engaging surface of the shoe is uniform. That is, it has a constant radius of curvature. With the conventional tensioner lever, problems are frequently encountered in designing the layout of the path of travel of the transmission chain, especially in the case where the tensioner lever is intended for use in various different engines.

More specifically, since the shoe of a conventional tensioner lever has a long abutment region, the distance between the shafts of the driving sprocket and the driven sprocket is necessarily long. The length of the tensioner lever, therefore, requires the engine to be large for a given engine output. Moreover, the lengths of the spans of chain between the sprockets also results in excessive noise due to vibration of the chain.

Another problem is that the constant curvature of the shoe prevents the tensioner lever from properly following the displacement of the line of travel of the transmission chain travel as the chain loosens. The failure of the tensioner lever to follow displacement of the line of chain travel can lead to wear in various parts of the transmission device, and even to transmission failure.

Object of this invention is to provide an improved tensioner level.

The power transmission in accordance with the invention comprises an endless, flexible transmission medium, engaged with a driving sprocket and a driven sprocket, and a tensioner lever for applying a tensioning force to the slack side of the transmission medium returning from the driving sprocket to a driven sprocket. The tensioner lever has an arc-shaped shoe surface, which abuts the slack side of the transmission medium in sliding contact therewith. The tensioner lever is pivoted for rotation toward and away from the slack side of the transmission medium, about a pivot axis adjacent the driving sprocket and extending toward the driven sprocket. The lever has a first end adjacent the pivot axis and a tip remote from the pivot axis. The arc-shaped shoe surface comprises a curved guide region extending from a location adjacent the first end of the lever, for guiding and controlling a portion of the slack side of the transmission medium moving from the location adjacent the first end of the shoe surface toward the driven sprocket, and a curved pressing region, continuous with the curved guide region, and extending toward the tip, for taking up slack in a portion of the slack side of the transmission medium moving from the guide region toward the driven sprocket. In a preferred embodiment, the radius of curvature of the curved guide region is greater than the radius of curvature of the curved pressing region.

The transmission medium, which approaches the pivot end of the lever, is sufficiently guided and controlled on the curved guide region of the lever, and it is not necessary to depend on the portion of the lever near its tip for guiding and controlling the approaching portion of the transmission medium. Accordingly, the tensioner lever according to the invention can be freely designed to adapt to changes in sliding resistance, in tension, and in the line of travel, which are apt to occur in the transmission medium. Thus, in accordance with the invention, greater freedom in the design of layout of a transmission device can be realized.

Since the radius of curvature of the curved guide region is larger than the radius of curvature of the pressing region, the length of the guide region can be shortened, whereby the transmission device can be made more compact as compared with a transmission device utilizing a conventional tensioner in which the arc-shaped shoe surface has a constant curvature.

The invention will now be described in detail with reference to the accompanying drawings, in which:
- FIG. 1: is a schematic side elevational view of a tensioner lever in accordance with the invention,
- FIG. 2: is a two-part schematic view of a timing transmission, showing the path of travel of the timing chain and comparing the length of a conventional tensioner lever to the length of a tensioner lever in accordance with the invention,
- FIG. 3: is a two-part schematic view, similar to FIG. 2, comparing a conventional transmission and a smaller transmission in which a the tensioner lever in accordance with the invention is used, and
- FIG. 4: is a two-part schematic view of a conventional timing transmission and a timing transmission in accordance with the invention, showing differences between the tensioner plunger strokes.

The tensioner lever in accordance with the invention maintains the required tension in an endless, flexible transmission medium which travels around a driving sprocket and one or more driven sprockets, The lever is pivoted on an axis adjacent the end approached by the transmission medium as it travels away from the driving sprocket. In the lever, an arc-shaped shoe surface is in sliding contact with the endless, flexible, transmission medium. The curved shoe surface comprises two regions. The first region is a curved guide surface region, which guides and controls the approaching transmission medium. The second region is a curved pressing surface region, continuous with the guide surface region, for absorbing slack in the portion of the transmission medium between the tip of the lever and the driven sprocket.

Except for the fact that the shoe surface is arc-shsped, the structure of the tensioner lever can take any of a broad variety of forms. For example, the lever can comprise a synthetic resin shoe on which the transmission chain slides, and a cast aluminum base, which maintains the form of the synthetic shoe member. In this type of lever, known as a "hook-locking" type of lever, the shoe and base are integrally locked by hooks protruding from both sides of the shoe. In another form of tensioner lever, known as a "slide-in" lever, a metal reinforcing plate fits into a longitudinal slot provided in a synthetic resin guide body on which the transmission chain slides. In still another type of lever, known as a "sandwich-molded" lever, a core of a slide rail, and a core of rail support, are integrated by a skin layer formed by a sandwich molding process.

Any of a variety of endless, flexible, transmission media may be used with the tensioner lever of the invention. For example, a transmission chain such as a roller chain, a silent chain or the like may be used, and, alternatively, a transmission belt such as a toothed belt or the like may also be used.

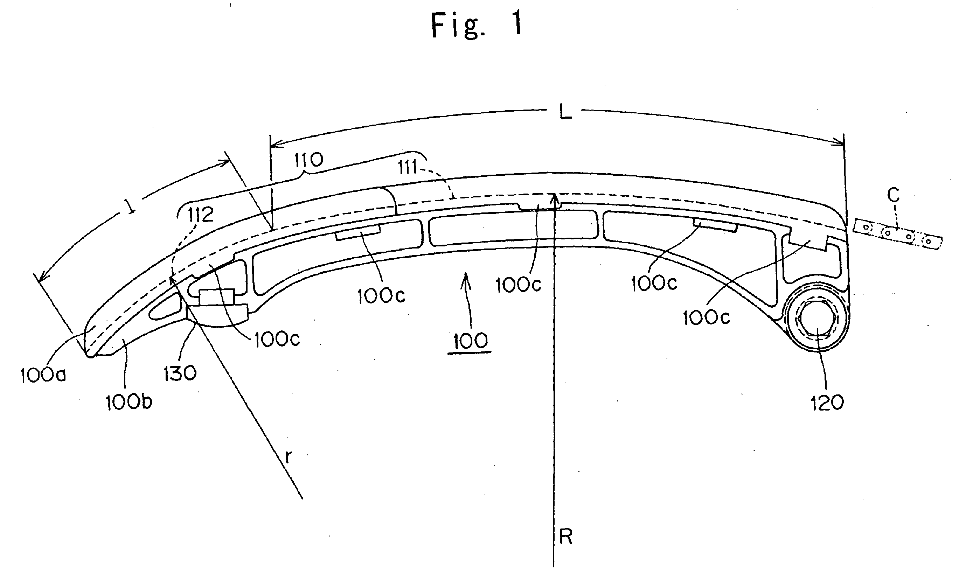

As shown in FIG. 1, the tensioner lever 100 in accordance with the invention is pivoted on a shaft 120, which can protrude from an engine block (not shown). The tensioner lever 100 can be of the hook-locking type, in which a synthetic resin shoe 100a, on which a transmission chain C slides, and a die-cast aluminum base 100b, for holding the shoe 100a, are integrally locked to each other by hooks 100c protruding from both sides of the shoe 100a. An arc-shaped shoe surface 110, which is in sliding contact with the transmission chain C, comprises a curved guide region 111, which guides and controls the part of the transmission chain C approaching the pivoted end of the lever, and a curved pressing region 112, which is continuous with the guide region 111, and absorbs slack in the part of the transmission chain C moving away from the tip the tensioner lever 100.

The convex, curved, shoe surface 110 faces the transmission chain C, and a pad 130 on the opposite side of the tensioner lever 100 is engaged by a plunger (not shown), which protrudes from a tensioner, The plunger, in cooperation with the tensioner lever 100, imparts the required tension to the transmission chain C, which travels between a driving sprocket and a driven sprocket in an automobile engine (not shown in FIG. 1).

Although in the case of the tensioner lever 100, the arc-shaped shoe surface 110 comprises a guide region 111 and a pressing region 112, an extremely short, curved, introduction region may be provided ahead of, and continuous with, the guide region 111, for introducing the transmission chain C smoothly to the guide region 111 as it approaches the end of the tensioner lever 100 adjacent the pivot shaft 120.

In the arc-shaped shoe surface 110, the radius of curvature R of the guide region 111 is larger than the radius of curvature r of the pressing region 112. Consequently the arc-shaped shoe surface 110 is bent further than the shoe surface of a conventional tensioner in which the shoe surface has a constant curvature.

In the tensioner lever 100 shown in FIG. 1, the length L of the guide region 111, and the length 1 the pressing region 112, are related by a ratio of approximately 3 : 1. Thus, the part of the transmission chain C approaching the end of the tensioner lever 100 near the pivot shaft 120 is guided and controlled along a gentle traveling line. In a case where the radius of curvature R of the guide region 111 is 300 mm or more because of a space factor such as the distance between the crankshaft and a camshaft in an engine, the length 1 of the pressing region 112 is desirably at least one-fourth the length L of the guide region 111. On the other hand, where the radius of curvature R of the guide region 111 is 300 mm or less, the length 1 of the pressing region 112 is desirably at least one-third the length L of the guide region 111.

The border at which the guide region 111 and the pressing region 112 meet is continuous and has a gentle slope, so that significant wear, which would otherwise be generated as the transmission chain C slides on the shoe surface 110, can be avoided.

Because the shoe surface 110 comprises a guide region 111 extending toward the tip of the tensioner lever 100 from the end of the tensioner lever 100 adjacent the pivot shaft 120, and a pressing curve region 112 extending from the guide region 111 toward the tip of the tensioner lever 100, the transmission chain C, approaching the end of the tensioner lever 100 adjacent the pivot shaft 120, is guided and controlled by the guide region 111.

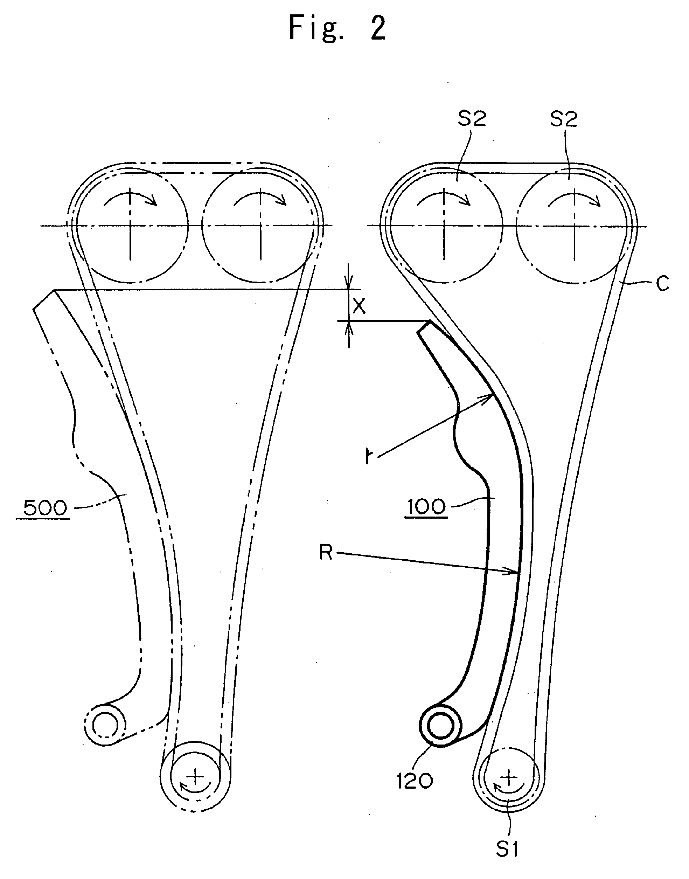

In FIGS. 2 to 4, driving sprocket S1, which is on a crankshaft, rotates as shown by an arrow, and meshes with chain C, which delivers rotational power to camshaft sprockets S2, the direction of rotation of which is also indicated by arrows.

The operating conditions of the tensioner lever 100 in FIG. 1 are shown schematically for easy comprehension. However, the lever structure is the same as in FIG. 1. As shown in FIG. 2, even if the entire length of the tensioner lever 100 is reduced by an amount X, looseness of the transmission chain C due to a change in tension can be sufficiently absorbed. Thus the tensioner lever 100 of the invention can be shorter than the conventional tensioner lever 500, which has a simple, arc-shaped shoe surface, but can still perform satisfactorily.

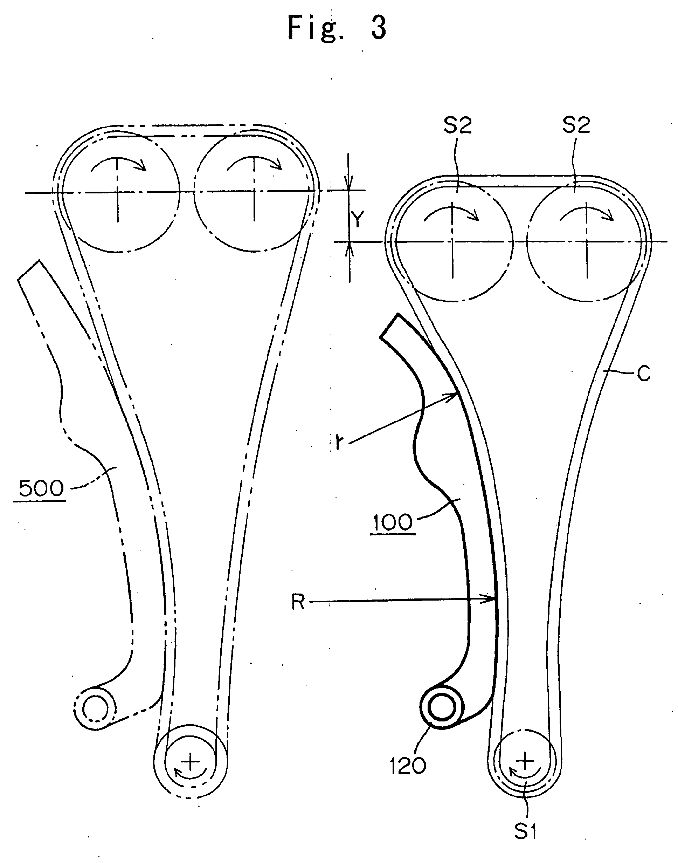

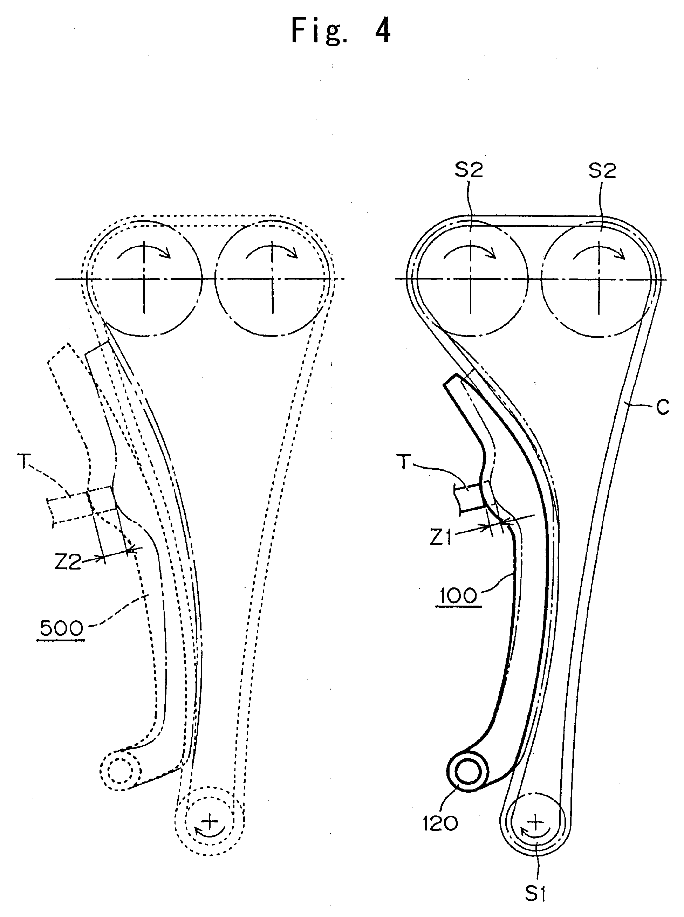

As shown in FIG. 3, even if the distance between the crankshaft and the camshafts is decreased by bringing the camshaft positions closer to the crankshaft by a distance Y, looseness of the transmission chain C due to a change in tension or the like can be absorbed sufficiently, and backlash and vibration noise in the transmission chain can be suppressed. Furthermore, as shown in FIG. 4, even if the plunger stroke Z1 of the tensioner T is significantly shorter than the plunger stroke Z2 of the tensioner used with the conventional tensioner lever 500, that is if Z1 < Z2, looseness of the transmission chain C can be absorbed sufficiently. Accordingly, the tensioner lever 100 in accordance with the invention provides the transmission designer with greater freedom to design a transmission that adapts to different sliding resistances, changes in tension, and changes in the chain traveling line, which are apt to occur over time in the operation of the transmission chain C. Thus the invention provides greater flexibility in automobile engine design.

The length of the guide region 111 is shortened by the fact that the curvature r of the pressing region 112 is smaller than the curvature R of the guide region 111. Thus the overall length of the tensioner lever 100 can be made shorter as compared with the conventional tensioner lever 500 in which the shoe surface has a constant curvature. Accordingly, the invention can contribute to significant improvement in the compactness of an automobile engine.

### REFERENCE NUMBERS

- 100, 500: tensioner lever
- 100a: shoe
- 100b: base
- 100c: hook
- 110: shoe surface
- 111: guide region
- 112: pressing region
- 120: shaft
- 130: pad

- C: transmission chain
- L: length of the guide region 111
- I: length the pressing region 112
- R: radius of curvature of the guide region 111
- r: radius of curvature of the pressing region 112
- S1: driving sprocket
- S2: camshaft sprocket, driven sprocket
- T: tensioner
- Y: distance
- Z1,: Z2 plunger stroke

## Claims

1. Power transmission comprising an endless, flexible transmission medium (C) engaged with a driving sprocket (S1) and a driven sprocket (S2), and a tensioner lever (100) for applying a tensioning force to the slack side of the transmission medium (C) returning from the driving sprocket (S1) to a driven sprocket (S2), the tensioner lever (100) having an arc-shaped shoe surface (110), which abuts the slack side of the transmission medium (C) in sliding contact therewith, the tensioner lever (100) being pivoted for rotation toward and away from the slack side about a pivot axis adjacent the driving sprocket (S1) and extending toward the driven sprocket (S2), the tensioner lever (100) having a first end adjacent the pivot axis and having a tip remote from the pivot axis, the arc-shaped shoe surface (110) comprising a curved guide region (111) extending from a location adjacent the first end, for guiding and controlling a portion of the slack side of the transmission medium (C) moving from the location adjacent the first end of the shoe surface (110) toward the driven sprocket (S2), and a curved pressing region (112), continuous with the curved guide region (111) and extending toward the tip, for taking up slack in a portion of the slack side of the transmission medium (C) moving from the guide region (111) toward the driven sprocket (S2), in which the radius (R) of curvature of the curved guide region (111) is greater than the radius (r) of curvature of the curved pressing region (112).

2. Tensioner lever for applying a tensioning force to the slack side of an endless, flexible, transmission medium (C) returning from a driving sprocket (S1) to a driven sprocket (S2), the tensioner lever (100) having an arc-shaped shoe surface (110), for abutting the slack side in sliding contact therewith, the tensioner lever (100) having a first end and a tip remote from the first end, and being pivotable about a pivot axis adjacent the first end, the arc-shaped shoe surface (110) comprising a curved guide region (111) extending from a location adjacent the first end, for guiding and controlling a portion of the slack side of a transmission medium moving from the location adjacent the first end of the shoe surface (110) toward a driven sprocket (S2), and a curved pressing region (112), continuous with the curved guide region (111) and extending toward the tip, for taking up slack in a portion of the slack side of the transmission medium (C) moving from the guide region (111) toward the driven sprocket (S2), in which the radius (R) of curvature of the curved guide (111) region is greater than the radius (r) of curvature of the curved pressing region (112).

3. Tensioner according to claim 2, **characterized in that** a length (L) of the guide region (111), and a length (1) the pressing region (112), are related by a ratio of approximately 3 : 1 to 4 : 1.

4. Tensioner according to claim 3, **characterized in that** in a case where the radius (R) of curvature of the guide region (111) is 300 mm or more the length (L) of the guide region (111), and the length (1) is at least one-fourth the length (L) of the guide region (111).

5. Tensioner according to claim 3, **characterized in that** in a case where the radius (R) of curvature of the guide region (111) is 300 mm or less the length (L) of the guide region (111), and the length (1) is at least one-third the length (L) of the guide region (111).
